# EUROPÄISCHE PATENTSCHRIFT

(11) **EP 0 618 248 B1**
(45) Veröffentlichungstag und Bekanntmachung des Hinweises auf die Patenterteilung: **10.06.1998**
(21) Anmeldenummer: 94103736.8
(22) Anmeldetag: 11.03.1994
(51) Int. Cl.: C08G 63/64

(54) **Carbonsäureester- und Kohlensäureestergruppen enthaltendes Polymer und Verfahren zu seiner Herstellung**
Polymer containing carboxylic acid ester groups and carbonic acid ester groups and their manufacturing process
Polymère contenant des groupes d'esters de l'acide carboxylique et d'esters de l'acide carbonique et procédé de fabrication

(30) Priorität: 27.03.1993 DE 4310114
(43) Veröffentlichungstag der Anmeldung: 05.10.1994
(73) Patentinhaber: Buna Sow Leuna Olefinverbund GmbH, 06258 Schkopau (DE)
(72) Erfinder: Aust, Rudolf, Dr., D-06258 Schkopau (DE); Rom, Christel, D-06124 Halle (DE); Runge, Jürgen, Dr., D-06120 Halle (DE); Herrmann, Cornelia, Dr., D-06124 Halle (DE)

(56) Entgegenhaltungen:
- EP-A- 0 358 326
- EP-A- 0 427 185
- EP-A- 0 444 282

## Beschreibung

Die Erfindung betrifft ein Polymer, welches durch eine thermoplastische Umformung oder ein anderes geeignetes Aufarbeitungsverfahren als Werkstoff für biologisch abbaubare Halbzeuge, Formteile oder Beschichtungen verwendet werden kann, sowie ein Verfahren zu seiner Herstellung.

Obwohl Kohlendioxid als Reaktionspartner für organischchemische Reaktionen eine relativ stabile und reaktionsträge Verbindung darstellt, gibt es eine Reihe von Reaktionen, bei denen Kohlendioxid mit organischen Verbindungen reagiert bzw. in Polymerketten eingebaut werden kann. Dies wird z.B. in einer zusammenfassenden Darstellung von Rokicki und Kuran (J. Macromol. Sci. - Rev. Macromol. Chem. C 21(1), S. 135-186) beschrieben.

So ist bekannt, daß Kohlendioxid durch anionische Polymerisation mit Epoxiden zu Kohlensäureestergruppen enthaltenden Polymeren umgesetzt werden kann. Diese Polymere werden auch als Polyalkylencarbonate oder aliphatische Polycarbonate bezeichnet.

Im US-A- 3 248 415 wird eine Methode zur Herstellung eines Polymeren beschrieben, welches aus Kohlendioxid und 1,2 Epoxiden durch Copolymerisation erhalten wird. Es werden Molekulargewichte bis 5000 erreicht.

Im Jahr 1969 erschien eine Veröffentlichung von S. Inoue (Polymer Letters Vol. 7, S. 287-292) zur gleichen Thematik. Als Katalysatorsysteme wurden Zn- und Al-Alkyle bzw. deren H₂O-Komplexe verwendet.

Derselbe Autor beschreibt in US-A- 3 585 168 ein Verfahren zur Erstellung von hochmolekularen Copolymeren eines Epoxids wie Ethylenoxid, Propylenoxid, Styrenoxid, Isobutylenoxid oder Epichlorhydrin und Kohlendioxid, wobei die Copolymerisation unter dem Druck des CO₂-Gases und in Gegenwart einer organometallischen Verbindung als Katalysator durchgeführt wird. Weitere Patente derselben Erfinder (US-A-3 900 424 und 3 953 383) betreffen das verwendete Katalysatorsystem.

Eine weitere Katalysatorvariante auf Basis von Zinn-Verbindungen beschreibt das EP-A-0 228 037.

Zur Regelung des Molekulargewichts kann ein sterisch gehinderter Protonendonator wie Phenol, 4-Isopropylphenol und andere verwendet werden (US-A- 4 943 677).

Es ist auch bekannt, Kohlendioxid gemeinsam mit Diepoxiden wie z.B. Butadiendioxid, 1,4-bis (2,3 Epoxipropoxi)-benzol u.a. zu copolymerisieren (US-A- 3 699 079).

Es ist auch möglich, ternäre, also aus 3 Ausgangskomponenten bestehende Copolymere herzustellen, an deren Zusammensetzung neben Kohlendioxid zwei unterschiedliche Epoxide beteiligt sind. Beispiele hierfür sind in den US-A- 4 833 036 und 4 851 507 beschrieben.

Es lassen sich auch Block-Co-Polymere aus Kohlendioxid und unterschiedlichen Epoxiden herstellen (EP-A- 0 240 812).

Während, wie dargestellt wurde, die Copolymerisation von Kohlendioxid mit Epoxiden bekannt ist, ist es nicht bekannt, Kohlendioxid mit Laktonen zu Polymeren umzusetzen. Ebenso ist nicht bekannt, daß Laktone mit Epoxiden zu Polymeren umgesetzt werden können.

Alle vorstehend dargestellten Verfahren erlauben noch nicht eine ausreichende Variationsvielfalt, um durch Kombination von Polymerbausteinen neue anwendungstechnisch nutzbare Gebrauchseigenschaften zu erzielen.

Aufgabe der Erfindung ist es, neue Copolymere zu erhalten, die Kohlensäureestergruppen enthalten und darüberhinaus durch weitere Polymerbausteine modifiziert sind. Die Polymeren sollen biologisch abbaubar und thermoplastisch sowie nach anderen geeigneten Aufarbeitungsverfahren verarbeitbar sein sowie neue anwendungstechnisch nutzbare Gebrauchseigenschaften besitzen.

Eine weitere Aufgabe der Erfindung ist es, ein Herstellungsverfahren für diese Copolymere durch anionische Polymerisation zu entwickeln.

Erfindungsgemäß enthält das Copolymer neben Alkylencarbonatgruppen Carbonsäureester-Baugruppen und entspricht in seinem chemischen Aufbau der Formel I 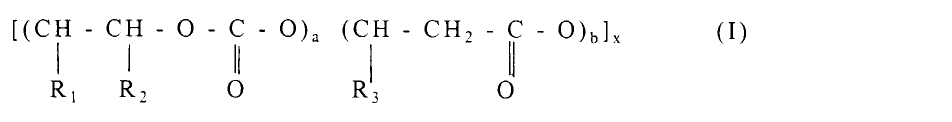 wobei R₁, R₂, R₃, a, b und x folgende Bedeutung haben:
- R₁ =: Wasserstoff oder geradkettige oder verzweigte
- R₂ =: Alkylreste der allgemeinen Formel CₙH₂ₙ₊₁ mit n= 1
- R₃ =: bis 4
- (a + b) =: 2 bis 100
- x =: 10 bis 10000

Bevorzugte Ausführungsformen der Erfindung sind Copolymere der Formel I mit folgenden Werten für R₁, R₂, R₃, a, b und x:
- R₁ =: H, -CH₃
- R₂ =: H
- R₃ =: -CH₃, -CH₂-CH₃, -CH₂-CH₂-CH₃
- a =: 60 bis 95
- b =: 40 bis 5
- x =: 250 bis 1500

Erfindungsgemäß werden die Copolymere hergestellt, indem Epoxide mit Kohlendioxid in Gegenwart eines Laktons anionisch polymerisiert werden, wobei das Lakton nach erfolgter Ringöffnung so eingebaut wird, daß ein ternäres Copolymer entsteht. Während in diesem ternären System das molare Verhältnis von Epoxid zu Kohlendioxid immer 1:1 entspricht, kann der eingebaute Laktonanteil je nach den Reaktionsbedingungen und der Art des Laktons von diesem Verhältnis abweichen.

Die Herstellung erfolgt durch anionische Polymerisation einer oder mehrere Epoxidverbindungen der allgemeinen Formel II 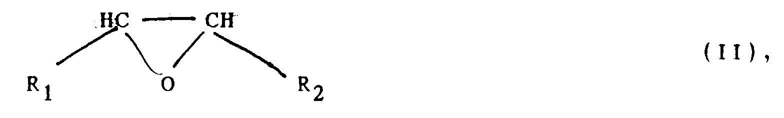 eines oder mehrerer Laktone der allgemeinen Formel III 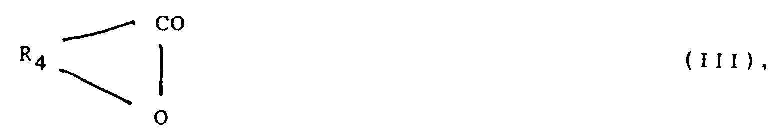 wobei R₄ ein geradkettiger oder verzweigter Alkylenrest mit bis zu 6 C-Atomen ist
und Kohlendioxid.

Als Epoxidverbindung wird vorzugsweise Ethylenoxid und/oder Propylenoxid und als Lakton β-Propiolakton, β-Methyl-β-propiolakton, ε-Valerolakton oder δ-Caprolakton oder Gemische derselben verwendet. Die Polymerisation erfolgt als Lösungspolymerisation, wobei chlorierte Kohlenwasserstoffe, aromatische und aliphatische Kohlenwasserstoffe als Lösungsmittel verwendet werden. Als Katalysator wird Zinkglutarat eingesetzt.

Die Polymere sind amorph, glasklar und löslich in Chlorkohlenwasserstoffen, aliphatischen Estern, Ketonen und Aromaten. Sie sind beständig gegen Alkohol, Wasser, Säuren, Glykole, Fette und Öle. Sie lassen sich leicht kleben und bedrucken. Die Polymere lassen sich bei Temperaturen im Bereich von 90 bis 180°C zu Halbzeugen und Formteilen verarbeiten. Sie weisen eine hohe Gasdichtheit insbesondere gegenüber Sauerstoff auf. Sie sind verträglich mit Weichmachern und können so im Grad ihrer Flexibilität variiert werden. Darüber hinaus sind die Polymere stoffwirtschaftlich weiter verwertbar, biologisch abbaubar und die daraus gefertigten Halbzeuge bzw. Formteile können durch Kompostierung entsorgt werden.

### Beispiel 1

In einem von Sauerstoff befreiten 500-ml-Rührreaktor werden 265 g Methylenchlorid, 70 g Ethylenoxid, 43 g β-Butyrolakton (β-Methyl-β-propiolakton) und 8,5 g Zinkglutarat eingefüllt. Danach wird Kohlendioxid aus einer Druckgasflasche bis zu einem Innendruck von 20 bar in den Reaktor eingebracht. Das Gemisch wird auf 83°C aufgeheizt und 6 h bei dieser Temperatur gerührt.

Nach den Abkühlen wird der Reaktor vorsichtig entspannt und die erhaltene viskose Lösung mit verdünnter Salzsäure und dann mit Wasser gewaschen. Anschließend wird die organische Phase langsam unter Rühren in 1200 ml Methanol eingerührt, wobei das Polymere ausfällt.

Zur Reinigung kann das Polymere wieder in Methylenchlorid oder Chloroform gelöst und erneut in Methanol gefällt werden. Das klare zähe Polymer wird unter Vakuum bei 50°C getrocknet. Der Umsatz zu methanolunlöslichem Polymer beträgt 55 % bezogen auf das eingesetzte Epoxid.

### Beispiel 2

Entsprechend den Bedingungen in Beispiel 1 werden 70 g Ethylenoxid und 29 g ε-Caprolakton in 265 g Methylenchlorid unter Verwendung von 6,2 g Zinkglutarat mit Kohlendioxid polymerisiert. Das Polymere wird entsprechend Beispiel 1 gewonnen. Es werden 83 g methanolunlösliches Polymer erhalten.

### Beispiel 3

93 g Propylenoxid und 22 g β-Butyrolakton werden in265 g Methylenchlorid unter Verwendung von 7 g Zinkglutarat als Katalysator mit Kohlendioxid unter gleichen Bedingungen wie in Beispiel 1 umgesetzt und das Polymere in der gleichen Weise aufgearbeitet. Es werden 45 g methanolunlösliches Polymer erhalten.

### Beispiel 4

66 g Propylenoxid und 21 g ε-Caprolakton werden in 265 g Methylenchlorid unter Verwendung von 5 g Zinkglutarat mit Kohlendioxid entsprechend dem Beispiel 1 umgesetzt. Das Polymer wird auf gleiche Weise wie in Beispiel 1 gewonnen. Die Ausbeute beträgt 43 g methanolunlösliches Polymer.

### Beispiel 5

Für die nach den Beispielen 1 bis 4 hergestellten Polymerisate wurden die Glasübergangstemperaturen T_{g} bestimmt, die in der folgenden Tabelle zusammengefaßt sind.

| Beispiel | Zusammensetzung Mol-Verhältnis der Alkylencarbonatgruppe zur Carbonsäureestergruppe | Glasübergangstemperatur ^{o}C |
|---|---|---|
| 1 | 0,9 : 0,1 | 15,5 |
| 2 | 0,96 : 0,04 | 21,0 |
| 3 | 0,92 : 0,08 | 29,0 |
| 4 | 0,95 : 0,05 | 24,0 |

## Patentansprüche

1. Carbonsäureester- und Kohlensäureestergruppen enthaltendes Polymer der Formel I 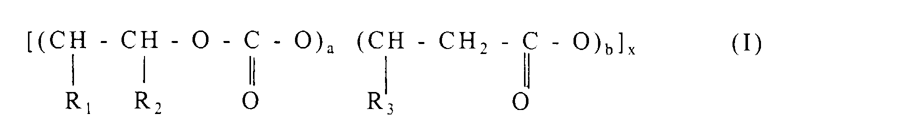 wobei R₁, R₂ und R₃ Wasserstoff oder geradkettige oder verzweigte Alkylgruppen C₁ bis C₄ sind und untereinander gleich oder unterschiedlich sein können und die Summe von a und b im Bereich von 2 bis 100 und x im Bereich von 10 bis 10000 liegt.

2. Carbonsäureester- und Kohlensäureestergruppen enthaltendes Polymer nach Anspruch 1, wobei R₁ = H oder CH₃, R ₂= H, R₃= -CH₃, -CH₂-CH₃ oder -CH₂-CH₂-CH₃ sind.

3. Carbonsäureester- und Kohlensäureestergruppen enthaltendes Polymer nach Anspruch 1 und 2, wobei a im Bereich 60 bis 95, b im Bereich 5 bis 40 und x im Bereich 250 bis 1500 liegt.

4. Verfahren zur Herstellung von einem Carbonsäureester- und Kohlensäureestergruppen enthaltenden Polymer der Formel I, dadurch gekennzeichnet, daß durch anionische Lösungspolymerisation
- ein oder mehrere Epoxidverbindungen der allgemeinen Formel II 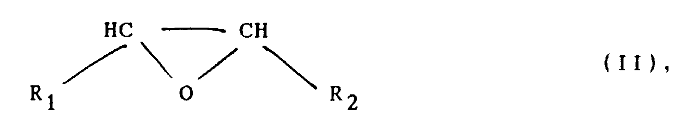
- ein oder mehrere Laktone der allgemeinen Formel III 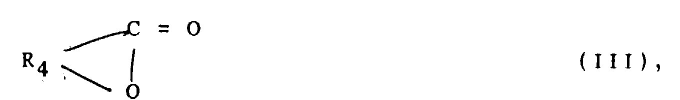 wobei R₄ ein geradkettiger oder verzweigter Alkylrest mit bis zu 6 C-Atomen ist,
- und Kohlendioxid bei einer Temperatur im Bereich von 20°C bis 100°C, einem Druck im Bereich von 1 bis 120 bar und in Anwesenheit eines für anionische Polymerisationen geeigneten Katalysatorsystems umgesetzt werden.

5. Verfahren nach Anspruch 4, dadurch gekennzeichnet, daß als Epoxidverbindung Ethylenoxid und/oder Propylenoxid, als Lakton β-Propiolakton, β-Methyl-β-propiolakton, -Valerolakton sowie -Caprolakton oder Gemische derselben und Kohlendioxid verwendet werden.

6. Verfahren nach Ansprüchen 4 und 5, dadurch gekennzeichnet, daß eine Temperatur im Bereich von 30 bis 80°C, ein Druck im Bereich von 30 bis 80 bar und als Katalysator ein Zinkcarboxylat oder deren Gemische angewendet werden.

## Claims

1. A polymer of formula I containing carboxylic acid ester and carbonic acid ester groups 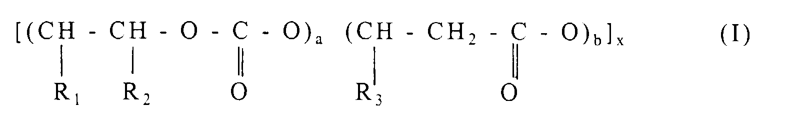 whereby R₁, R₂ and R₃ are hydrogen or straight-chain or branched alkyl groups C₁ to C₄ and may be equal or different from one another and the total of a and b is in the range of 2 through 100 and x is in the range of 10 to 10,000.

2. A polymer containing carboxylic acid ester and carbonic acid ester groups pursuant to claim 1, whereby R₁ = H or CH₃, R₂ = H, R₃ = - CH₃, - CH₂-CH₃ or CH₂-CH₂-CH₃.

3. A polymer containing carboxylic acid ester and carbonic acid ester groups pursuant to claims 1 and 2, whereby a is in the range of 60 to 95, b is in the range of 5 through 40 and x is in the range of 250 to 1,500.

4. A process for producing a polymer of formula I containing carboxylic acid ester and carbonic acid ester groups, characterised by the fact that through anionic solution polymerisation
- one or several of the epoxide compounds of the general formula II 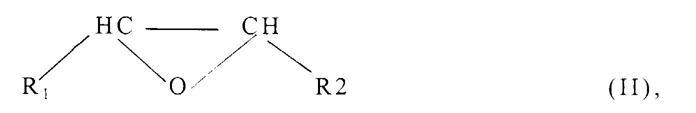
- one or several of the lactones of the general formula III 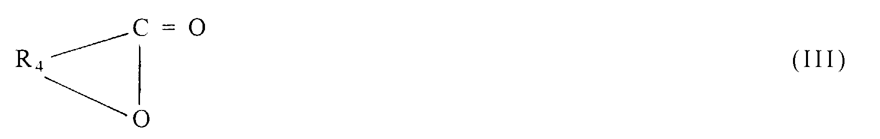 whereby R₄ is a straight-chain or branched alkyl residue with up to 6 C atoms.
- and carbon dioxide are converted at a temperature in the range of 20 °C to 100 °C, a pressure in the range of 1 to 120 bar and in the presence of a catalyst system suited to anionic polymerisations.

5. A process pursuant to claim 4, characterised by the fact that ethylene oxide and/or propylene oxide are used as an expoxide compound, β-propiolactone, β-methyl-β-propiolactone,-valerolactone as well as -caprolactone or mixtures of the same and carbon dioxide are used as lactone.

6. A process pursuant to claims 4 and 5, characterised by the fact that a temperature in the range of 30 °C to 80 °C, a pressure in the range of 30 to 80 bar and a zinc carboxylate or its mixtures are used as a catalyst.

## Revendications

1. Groupe d'esters carboxyliques et carboniques contenant un polymère de la formule I 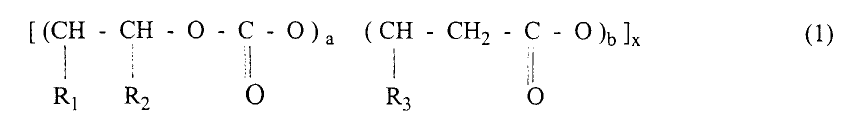 R₁ , R₂ et R₃ étant de l'hydrogène ou des groupes alkyle linéaires ou ramifiés de C₁ à C₄ et qui peuvent être entre eux identiques ou différents et la somme de a et b peut se situer dans le domaine de 2 à 100 et x dans le domaine de 10 à 10 000.

2. Groupe d'esters carboxyliques et carboniques contenant un polymère selon la spécification 1, avec R₁ = H ou CH₃ , R₂ = H, R₃ = -CH₃ , -CH₂-CH₃ ou -CH₂-CH₂-CH₃.

3. Groupe d'esters carboxyliques et carboniques contenant un polymère selon les spécifications 1 et 2, a se situant dans le domaine de 60 à 95, b entre 5 et 40 et x dans le domaine de 250 à 1 500.

4. Procédé de production d'un polymère de la formule I contenant des groupes d'esters carboxyliques et carboniques caractérisé par le fait que par la polymérisation anionique en solution sont transformés
- une ou plusieurs compositions époxy de la formule générale II 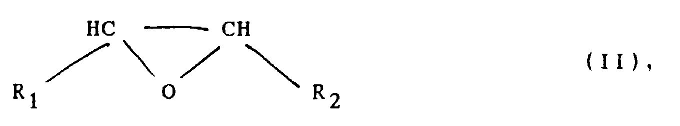
- une ou plusieurs lactones de la formule générale III 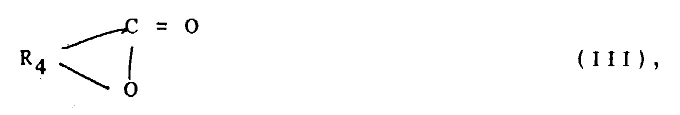 R₄ étant un reste d'alkyle linéaire ou ramifié ayant jusqu'à 6 atomes de C,
- et du gaz carbonique par une température du domaine de 20°C à 100°C, une pression du domaine de 1 à 120 bars, en présence d'un système de catalyseurs apte aux polymérisations anioniques.

5. procédé selon la prescription 4, caractérisé par le fait que sont utilisés comme combinaison époxy de l'oxyde d'éthylène et/ou de l'oxyde de propylène, comme lactone de la β-propiolactone, de la β-méthyle-β-propiolactone, de la -valérolactone et de la -caprolactone ou les mélanges de celles-ci et du gaz carbonique.

6. Procédé selon les prescriptions 4 et 5, caractérisé par le fait que sont mis en oeuvre une température dans le domaine de 30 à 80°C, une pression dans le domaine de 30 à 80 bars et comme catalyseur un caboxylate de zinc ou ses mélanges.
